# EUROPÄISCHE PATENTANMELDUNG

(11) **EP 4 349 564 A1**
(43) Veröffentlichungstag der Anmeldung: **10.04.2024**
(21) Anmeldenummer: 22199516.0
(22) Anmeldetag: 04.10.2022
(51) Int. Cl.: B29C 48/10, B29C 48/88, B29C 48/255

(54) **KÜHLRING ZUM KÜHLEN EINES FOLIENSCHLAUCHES**

(71) Anmelder: Plast-Control GmbH, 42899 Remscheid (DE)
(72) Erfinder: Konermann, Stefan, 42897 Remscheid (DE); Winhausen, Martin, 40591 Düsseldorf (DE); Shabani, Mallzim, 51375 Leverkusen (DE)
(74) Vertreter: Ter Meer Steinmeister & Partner

(57) **Zusammenfassung**

Kühlring zum Kühlen eines Folienschlauches (14) in einer Folienblasanlage, mit einem Kühlgaseinlass (18), einem Verteilersystem (20) zum Verteilen des Kühlgases auf dem Umfang des Folienschlauches (14), einem Zufuhrspalt (28), der dazu konfiguriert ist, das Kühlgas in radialer Richtung zum Folienschlauch zu leiten, einem Kühlgasauslass, der einen den Folienschlauch umgebenden, unter einem Anstellwinkel zur radialen Richtung angestellten Ringspalt (34) bildet, einem umlaufend in dem Ringspalt angeordneten flexiblen Stellring (36), und einem Kranz von einzeln steuerbaren Stellelementen (44) zur lokalen radialen Verformung des Stellrings (36), dadurch gekennzeichnet, dass der Stellring (36) an eine Wand (32) des Ringspaltes (34) anschließt und eine in Umfangsrichtung stetig verlaufende Begrenzungswand (42) für den aus dem Ringspalt austretenden Kühlgasstrom bildet.

## Beschreibung

Die Erfindung betrifft einen Kühlring zum Kühlen eines Folienschlauches in einer Folienblasanlage, mit einem Kühlgaseinlass, einem Verteilersystem zum Verteilen des Kühlgases auf dem Umfang des Folienschlauches, einem Zufuhrspalt, der dazu konfiguriert ist, das Kühlgas in radialer Richtung zum Folienschlauch zu leiten, einem Kühlgasauslass, der einen den Folienschlauch umgebenden, unter einem Anstellwinkel zur radialen Richtung angestellten Ringspalt bildet, einem umlaufend in dem Ringspalt angeordneten flexiblen Stellring, und einem Kranz von einzeln steuerbaren Stellelementen zur lokalen radialen Verformung des Stellrings.

Bei der Herstellung von Blasfolien dient ein solcher Kühlring dazu, den frisch aus einer Ringdüse extrudierten Folienschlauch zu kühlen, indem ein Kühlgas, zumeist Luft, von innen und/oder von außen gegen den Folienschlauch geblasen wird. Durch das Einblasen von Innenluft wird der Folienschlauch zu einer Blase aufgebläht, wobei das thermoplastische Folienmaterial verstreckt wird. Der Streckprozess endet an einer sogenannten Frostgrenze, an der die Temperatur des Folienmaterials so weit abgenommen hat, dass das Material seine Plastizität und Dehnbarkeit verliert. Je schneller die Folie gekühlt wird, desto geringer ist das Ausmaß der Streckung, und desto größer ist die Foliendicke. Der Stellring und die Stellelemente dienen dazu, die Kühlwirkung so zu steuern oder zu regeln, dass auf dem gesamten Umfang des Folienschlauches eine gleichmäßige Foliendicke erreicht wird.

Aus DE 40 01 287 A1 ist ein Kühlring der oben genannten Art bekannt, bei dem der flexible Stellring so in einem sich vertikal nach oben öffnenden Ringspalt angeordnet ist, dass er den Kühlluftstrom in zwei Teilströme aufteilt, von denen einer an der Folienblase entlang streicht, während der andere Teilstrom von der Folienblase weg gelenkt wird und somit nicht kühlwirksam ist. Mit Hilfe der Stellelemente wird die radiale Position jedes Umfangssegments des Stellrings verstellt und damit die Kühlwirkung beeinflusst. Die Umfangsverteilung der Foliendicke wird oberhalb der Frostgrenze gemessen und durch Ansteuerung der Stellelemente in einem geschlossenen Regelkreis geregelt.

In US 5 676 893 A wird ein Kühlring beschrieben, bei dem der Stellring durch einen Kranz vertikal beweglicher Schieber gebildet wird, die in den horizontal verlaufenden Zufuhrspalt hineinragen. Die einzeln beweglichen Schieber liegen dabei unmittelbar aneinander an, so dass sie einen Ringwall mit lokal einstellbarer Höhe bilden, der den Durchtrittsspalt für die Kühlluft mehr oder weniger verengt. Auf dem Weg des Kühlgases zum radial inneren Rand des Kühlrings wird dabei der Kühlgasstrom so weit verstetigt, dass die Kühlgasströmung in Umfangsrichtung nur allmählich variiert.

Aus EP 3 132 913 A1 ist ein ähnlicher Kühlring bekannt, bei dem die Verengung des Zufuhrspalts durch Verstellung eines flexiblen Stellrings bewirkt wird.

Aufgabe der Erfindung ist es, einen Kühlring zu schaffen, der einen kompakten Aufbau aufweist und der eine präzise Regelung des Dickenprofils der Folie ermöglicht.

Diese Aufgabe wird erfindungsgemäß dadurch gelöst, dass der Stellring an eine Wand des Ringspaltes anschließt und eine in Umfangsrichtung stetig verlaufende Begrenzungswand für den aus dem Ringspalt austretenden Kühlgasstrom bildet.

Durch Ansteuerung der Stellelemente kann der Stellring in radialer Richtung verformt werden und damit die effektive Breite des Ringspaltes lokal verringert werden, mit der Folge, dass die Kühlwirkung in dem betreffenden Umfangssegment abnimmt und die Kühlluft in benachbarte Segmente ausweicht, in denen der Ringspalt einen größeren Durchtrittsquerschnitt hat. Auf diese Weise kann der gesamte Kühlluftstrom, der von einem Gebläse oder einer Pumpe geliefert wird, ohne Verluste zur Kühlung der Folie genutzt werden, so dass ein geringer Energieverbrauch erreicht wird. Die Flexibilität des Stellringes stellt dabei sicher, dass die Oberfläche des Stellrings, die den effektiven Durchtrittsspalt für die Kühlluft begrenzt, in Umfangsrichtung einen stetigen Verlauf hat und keine Verwirbelungen der Kühlluftströmung verursacht. Der Stellring ist dabei so an der Wand des Kühlringes gehalten, dass er unabhängig von der jeweiligen Position der Stellelemente überall den Anschluss an diese Wand behält, so dass praktisch keine Leckströmungen auftreten. Da die Querschnittverengung unmittelbar im Kühlgasauslass stattfindet, lässt sich das Dickenprofil der Folienblase mit hoher Winkelauflösung steuern. Da die Stellbewegungen in radialer Richtung erfolgen, kann der Kühlring zudem eine geringe Bauhöhe aufweisen.

Vorteilhafte Ausgestaltungen der Erfindung sind in den Unteransprüchen angegeben.

In einer Ausführungsform ist der Stellring in einem Zwischenraum zwischen zwei parallelen Halteringen geführt und mit Hilfe der Stellelemente derart verformbar, dass er je nach Position der Stellelemente mehr oder weniger weit aus dem Zwischenraum herausragt. In diesem Fall sorgen die Halteringe unabhängig von der lokalen radialen Position des Stellringes für einen dichten Anschluss an die Wand des Kühlringes.

In einer anderen Ausführungsform ist der Stellring mit einer Befestigungsfläche fest an der Wand des Kühlrings gehalten, und die Stellelemente greifen in Abstand zu dieser Befestigungsfläche an dem Stellring an, so dass sie ein Biegemoment auf den Stellring ausüben.

In noch einer anderen Ausführungsform ist der Stellring segmentweise aufblasbar.

Die Erfindung ist sowohl bei Innenkühlringen als auch bei Außenkühlringen anwendbar.

Im folgenden werden Ausführungsbeispiele der Erfindung anhand der Zeichnung näher erläutert.

Es zeigen:
- Fig. 1: einen radialen Schnitt durch einen Kühlring gemäß der Erfindung;
- Fig. 2: einen Ausschnitt des Kühlringes in einer teilweise aufgeschnittenen Draufsicht;
- Fig. 3 und 4: vergrößerte Schnittdarstellungen wesentlicher Teile eines Kühlringes gemäß einem anderen Ausführungsbeispiel in zwei unterschiedlichen Stellzuständen; und
- Fig. 5: eine Schnittdarstellung eines Kühlringes gemäß einem weiteren Ausführungsbeispiel.

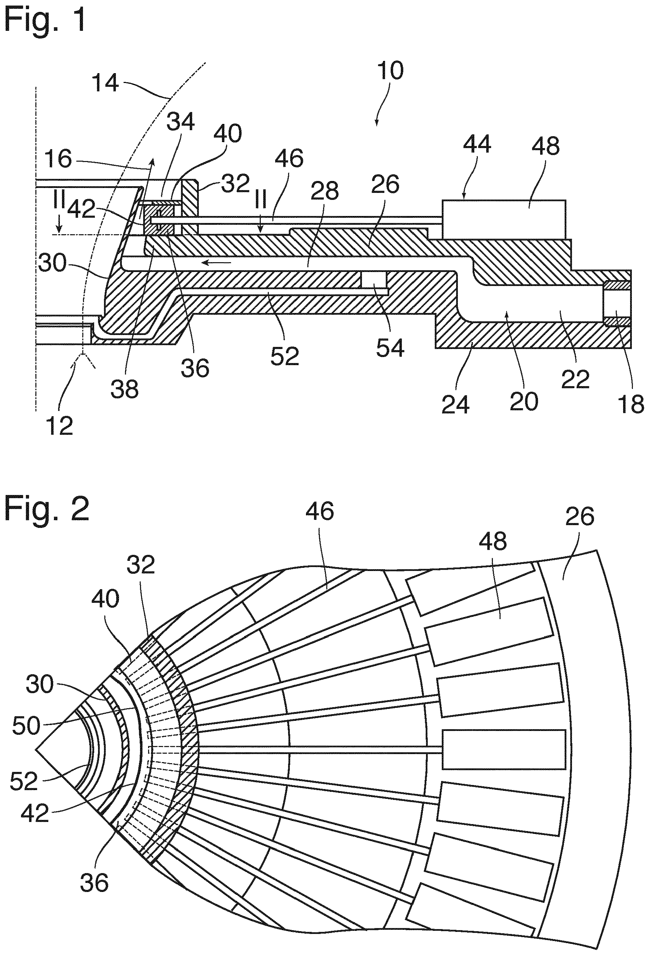

In Fig. 1 ist in einem radialen Halbschnitt ein Kühlring 10 gezeigt, der dicht oberhalb einer hier nur angedeuteten Ringdüse 12 einer Folienblasanlage angeordnet ist. Aus der Ringdüse wird ein Folienschlauch 14 extrudiert, der nach oben abgezogen wird und durch Einblasen von Innenluft radial aufgeweitet wird, so dass das Folienmaterial verstreckt wird. Bei dem Kühlring 10 handelt es sich im gezeigten Beispiel um einen Außenkühlring, der dazu dient, den Folienschlauch 14 während der Streckungsphase abzukühlen, indem ein Kühlgasstrom 16 (hier durch Pfeile angedeutet) so auf den Folienschlauch gerichtet wird, dass er an der Folie entlangstreicht.

Der Kühlring 10 weist an seinem äußeren Umfang mindestens einen Kühlgaseinlass 18 auf, über den das von einer Kühlgasquelle, beispielsweise einem Gebläse, bereitgestellte Kühlgas in ein Verteilersystem 20 im Inneren des Kühlrings zugeführt wird. Das Verteilersystem 20 bildet im äußeren Umfangsbereich des Kühlrings einen umlaufenden Ringraum 22, der durch ein Unterteil 24 und ein Oberteil 26 des Kühlrings begrenzt wird und in dem sich das Kühlgas gleichmäßig auf dem Umfang des Folienschlauches 14 verteilen kann. An den Ringraum 22 schließt sich radial nach innen ein horizontaler Zufuhrspalt 28 an, über den das Kühlgas unter Vergleichmäßigung der Strömung radial einwärts zum Folienschlauch 14 geleitet wird. Das Unterteil 24 des Kühlrings bildet am inneren Umfangsrand eine Umlenkglocke 30, die grob an die Kontur des Folienschlauches 14 angepasst ist und den Kühlgasstrom 16 in eine etwa parallel zur Folie verlaufende Richtung umlenkt. Das Oberteil 26 des Kühlrings bildet eine axial aufragende Wand 32, die zusammen mit der Umlenkglocke 30 einen schräg zur Radialrichtung angestellten Ringspalt 34 begrenzt, aus dem der Kühlgasstrom austritt.

In dem Ringspalt 34 ist umlaufend ein Stellring 36 aus gummielastischem Material, beispielsweise aus Silikon, angeordnet. Das Oberteil 26 bildet hier einen unteren Haltering 38 und einen oberen Haltering 40. Der Stellring 36 ist auf seinem gesamten Umfang radial verschiebbar zwischen diesen Halteringen geführt. Mit seinem radial inneren Rand ragt der Stellring 36 aus dem Zwischenraum zwischen den Halteringen heraus, so dass eine Wand 42 am inneren Umfang des Stellrings zusammen mit der Umlenkglocke 30 den Querschnitt des Austrittsspaltes für den Kühlgasstrom 16 bestimmt. Auf dem Oberteil des Kühlrings ist ein Kranz von Stellelementen 44 angeordnet, die dazu dienen, die radiale Position des Stellrings 36 in den verschiedenen Umfangsegmenten des Stellringes weitgehend unabhängig voneinander einzustellen. Jedes Stellelement 44 weist eine Stellstange 46 auf, deren eines Ende in dem Stellring 36 verankert ist und die sich durch die Wand 32 hindurch zu einem Antriebsmotor 48 mit zugehörigem Getriebe erstreckt, mit dem die Stellstange 46 in ihrer radialen Position verstellbar ist.

In der Draufsicht in Fig. 2 sind die Umlenkglocke 30 und die Wand 32 in einem Schnitt längs der Linie II-II in Fig. 1 gezeigt. Man blickt auf den oberen Haltering 40 und erkennt den Rand des Stellrings 36, der radial nach innen über den Rand des Halterings 40 übersteht. Ebenso ist zu erkennen, dass die Kontur der inneren Wand 42 des Stellrings in diesem Beispiel nicht exakt kreisförmig ist. Im oberen Teil in Fig. 2 wurden die Stellstangen 46 etwas zurückgezogen, so dass die Wand 42 hier eine Bucht 50 bildet, in der die Breite des Austrittsspaltes für den Kühlgasstrom vergrößert ist. Auf diese Weise würde man in dem entsprechenden Umfangsbereich des Folienschlauches 14 eine intensivere Kühlung und damit eine größere Foliendicke erreichen.

Die Flexibilität des Materials des Stellrings 36 stellt jedoch sicher, dass die Kontur der Wand 42 auf dem gesamten Umfang eine stetige (und differenzierbare) Kurve ist, die keinerlei Sprungstellen aufweist, an denen es zu einer Verwirbelung des Kühlgasstromes kommen könnte. Eine (hier nicht gezeigte) elektronische Steuerung für die Stellelemente 44 kann so ausgelegt sein, dass die Differenz in der radialen Position je zweier benachbarter Stellstangen 46 begrenzt ist, so dass eine übermäßige Verformung (Scherung) des Stellrings 36 vermieden wird.

Der Stellring ist in Fig. 1 mit einem rechteckigen Querschnitt gezeigt, kann jedoch im Bereich der Wand 42 auch geeignet verrundet sein.

In Fig. 1 ist zu erkennen, dass bei dem hier gezeigten Beispiel das Unterteil 24 des Kühlrings noch einen zweiten Austrittsspalt 52 für Kühlgas bildet. Dieser Austrittsspalt 52 ist am äußeren Umfang durch einen Kranz von Durchbrüchen 54 mit dem Zufuhrspalt 28 verbunden, so dass ein Teil des Kühlgasstromes in den Austrittsspalt 52 abgezweigt wird, der unmittelbar am Auslass der Ringdüse 12 mündet.

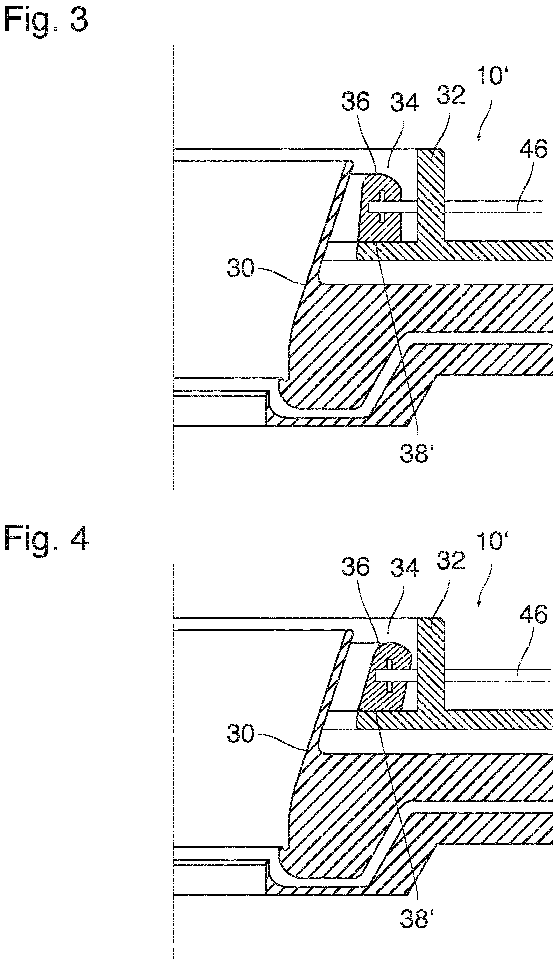

In Fig. 3 und 4 sind Teile eines Kühlrings 10' gemäß einem abgewandelten Ausführungsbeispiel gezeigt. Dieses Beispiel unterscheidet sich von dem Ausführungsbeispiel nach Fig. 1 und 2 nur dadurch, dass der Stellring 36 fest an einer Wand 38' des unteren Halterings 38 befestigt ist, so dass der obere Haltering 40 entfallen kann. Stattdessen ragt der Stellring, der hier ein gewisses Stromlinienprofil aufweist, frei in den Ringspalt 34 hinein. Da die Angriffspunkte der Stellstangen 46 gegenüber der Kontaktfläche zwischen dem Stellring 36 und der Wand 38' versetzt sind, üben die Stellstangen auf den Stellring 36 ein Biegemoment aus, das es ermöglicht, den Stellring beispielsweise in der in Fig. 4 gezeigten Weise zu verformen.

In einer anderen, nicht gezeigten Ausführungsform kann der Stellring 36 auch auf der Wand 38' verschiebbar sein.

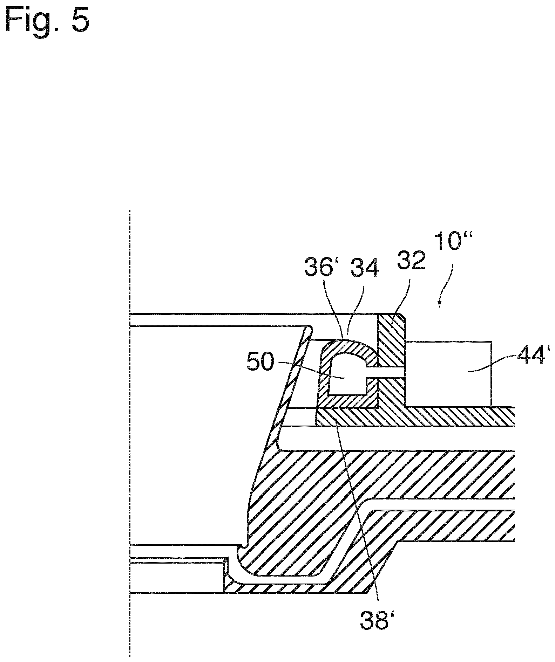

Fig. 5 zeigt einen Kühlring 10" mit einem Stellring 36', der in Umfangsrichtung in einer Folge aufblasbarer Segmente 50 unterteilt ist. Stellelemente 48' sind in diesem Fall als Pneumatikelemente ausgebildet, mit denen der Druck in den Segmenten 50 individuell steuerbar ist.

## Patentansprüche

1. Kühlring zum Kühlen eines Folienschlauches (14) in einer Folienblasanlage, mit einem Kühlgaseinlass (18), einem Verteilersystem (20) zum Verteilen des Kühlgases auf dem Umfang des Folienschlauches (14), einem Zufuhrspalt (28), der dazu konfiguriert ist, das Kühlgas in radialer Richtung zum Folienschlauch zu leiten, einem Kühlgasauslass, der einen den Folienschlauch umgebenden, unter einem Anstellwinkel zur radialen Richtung angestellten Ringspalt (34) bildet, einem umlaufend in dem Ringspalt angeordneten flexiblen Stellring (36; 36'), und einem Kranz von einzeln steuerbaren Stellelementen (44; 44') zur lokalen radialen Verformung des Stellrings (36), **dadurch gekennzeichnet, dass** der Stellring (36) an eine Wand (32; 38') des Ringspaltes (34) anschließt und eine in Umfangsrichtung stetig verlaufende Begrenzungswand (42) für den aus dem Ringspalt austretenden Kühlgasstrom bildet.

2. Kühlring nach Anspruch 1, bei dem der Stellring verschiebbar an einem Halteringen (38) gehalten ist und diesen Haltering mit seinem die Begrenzungswand (42) bildenden Rand überragt.

3. Kühlring nach Anspruch 2, bei dem der Stellring verschiebbar zwischen zwei parallelen Halteringen (38, 40) gehalten ist und mindestens einen dieser Halteringe mit seinem die Begrenzungswand (42) bildenden Rand überragt.

4. Kühlring nach Anspruch 1, bei dem der Stellring (36) fest an der Wand (38') des Ringspaltes (34) befestigt ist und von dieser Wand aus frei in den Ringspalt (34) hineinragt und bei dem die Stellelemente (44) in einer gegenüber der Wand (38') versetzten Position an dem Stellring angreifen und dazu ausgebildet sind, ein Biegemoment auf den Stellring auszuüben.

5. Kühlring nach einem der vorstehenden Ansprüche, bei dem die Stellelemente (44) radial verlaufende Stellstangen (46) aufweisen, die verschiebbar durch die Wand (32) des Ringspaltes (34) hindurchgeführt und in oder an dem Stellring (36) verankert sind.

6. Kühlring nach Anspruch 1, bei dem die Stellelemente (48') dazu ausgebildet sind, aufblasbare Segmente (50) des Stellrings (36') aufzublasen.
